# EUROPÄISCHE PATENTSCHRIFT

(11) **EP 3 377 274 B1**
(45) Veröffentlichungstag und Bekanntmachung des Hinweises auf die Patenterteilung: **05.05.2021**
(21) Anmeldenummer: 16804703.3
(22) Anmeldetag: 16.11.2016
(51) Int. Cl.: B25J 5/00, B25J 9/00, B25J 19/02, B25J 19/06, B25B 5/06

(54) **ANKOPPELEINRICHTUNG UND ANKOPPELVERFAHREN**
COUPLING DEVICE AND COUPLING METHOD
DISPOSITIF DE RACCORDEMENT ET PROCÉDÉ DE RACCORDEMENT

(30) Priorität: 19.11.2015 DE 102015120058
(43) Veröffentlichungstag der Anmeldung: 26.09.2018
(73) Patentinhaber: KUKA Deutschland GmbH, 86165 Augsburg (DE)
(72) Erfinder: RIEDEL, Martin, 86165 Augsburg (DE)
(74) Vertreter: Ernicke, Klaus Stefan
(86) Internationale Anmeldenummer: PCT/EP2016/077807
(87) Internationale Veröffentlichungsnummer: WO 2017/085094

(56) Entgegenhaltungen:
- DE-A1-102014 205 654
- JP-A- H02 190 276
- JP-A- 2001 341 085
- JP-A- 2011 173 218
- JP-A- 2012 056 044
- JP-A- 2013 166 197

## Beschreibung

Die Erfindung betrifft eine Ankoppeleinrichtung und ein Ankoppelverfahren für eine mobile Prozesseinrichtung mit einem programmierbaren Industrieroboter und einer Transportvorrichtung.

Eine solche Ankoppeleinrichtung ist aus der DE 20 2012 100 646 U1 bekannt. Sie ist als formschlüssige Absteckung zwischen dem fahrbaren Tragmittel eines Industrieroboters und einem Werkstück oder einem Arbeitsplatz ausgebildet. Das Tragmittel wird durch Eigenbewegung des Industrieroboters bewegt. JP 2013 166197 A offenbart eine weitere Kupplungsvorrichtung, bestehend aus einer Klemmeinrichtung, deren obere Klemmbacke betätigt und deren untere Klemmbacke manuell verschraubt wird.

JP 2012 056044 A offenbart eine weitere Kopplungsvorrichtung, die einen beweglichen Träger umfasst, auf dem der Roboter platziert wird und der gegen die Oberseite eines Arbeitstisches gedrückt werden kann.

Es ist Aufgabe der vorliegenden Erfindung, eine verbesserte Ankoppeltechnik aufzuzeigen.
Die Erfindung löst diese Aufgabe mit den Merkmalen im Verfahrens- und Vorrichtungshauptanspruch.
Die beanspruchte Ankoppeltechnik, d.h. die Ankoppeleinrichtung und das Ankoppelverfahren, haben verschiedene Vorteile. Hervorzuheben sind das niedrige Gewicht und die dadurch erzielte Energieeffizienz, die kompakte Bauform mit Vorteilen für Wendigkeit und Mobilität sowie das bevorzugt klemmende Ankoppeln mit Vorteilen für Steifigkeit und mechanische Stabilität. Die beanspruchte Ankoppeltechnik bietet eine besonders einfache und universal einsetzbare Möglichkeit zur Klemmfixierung der mobilen Prozesseinrichtung und ihres programmierbaren Industrieroboters an einem Arbeitsplatz an einer Prozessstation. Die fixierende Klemmverbindung erfolgt an einer Klemmleiste des Arbeitsplatzes. Dies kann eine meist ohnehin vorhandene Tischplatte am Arbeitsplatz sein.
Durch die Ankoppeleinrichtung lässt sich die mobile Prozesseinrichtung an einer Vielzahl unterschiedlicher Arbeitsplätze bedarfsweise ankoppeln. Dies ist insbesondere an manuellen Arbeitsplätzen mit der besagten Tischplatte möglich. Durch das Ankoppeln und die Klemmfixierung kann der Industrieroboter am Tischrand und sehr nahe am Prozessbereich des Arbeitsplatzes sowie etwa in Höhe der Tischoberfläche angeordnet werden.
Die beanspruchte Ankoppeltechnik erlaubt den Einsatz klein bauender Industrieroboter. Dies können insbesondere taktile Industrieroboter mit einer zugeordneten und externe Belastungen aufnehmenden Sensorik sein, deren taktile Fähigkeiten und sensitive Eigenschaften für den Prozess und bedarfsweise auch während der Fahrt der mobilen Prozesseinrichtung zur Detektion etwaiger Hindernisse eingesetzt werden können.

Die Klemmeinrichtung weist mehrere parallele, horizontale und relativ zueinander bewegliche Klemmbacken auf, welche die Klemmleiste bzw. die Tischplatte zwischen sich flächig einklemmen.

Die mehreren Klemmbacken sind höhenverstellbar an der Transportvorrichtung angeordnet. Die Anordnung der Klemmstelle mit Abstand über dem Untergrund an der Tischplatte hat den Vorteil einer mechanisch besonders günstigen Fixierstelle. Die im Prozess auftretenden und vom Industrieroboter eingeleiteten Reaktionskräfte können an der Tischplatte vorzugsweise breitflächig abgestützt und aufgenommen werden.

Eine obere Klemmbacke ist als Träger für den Industrieroboter ausgebildet und weist einen Roboteranschluss auf, wobei eine untere Klemmbacke als Gegenhalter ausgebildet ist. Die Klemmbacken sind als abgewinkelte, einander übergreifende Profile ausgebildet, wobei das Spannmittel zwischen den Klemmbacken angeordnet ist. Hierdurch lässt sich auf einfache Weise die Klemmeinrichtung gegenüber der jeweils gegebenen Klemmleisten- oder Tischplattenhöhe anpassen. Zumindest eine Klemmbacke kann an die Formgebung der Klemmleiste bzw. Tischplatte adaptierbar sein, wobei z.B. ein Stützrahmen oder dgl. an der Tischplattenunterseite übergriffen werden kann und eine breitflächige klemmende Anlage der Klemmbacken an der Ober- und Unterseite der Tischplatte ermöglicht wird.
Die Ankoppeleinrichtung kann eine Positioniereinrichtung für die Positionierung der Klemmeinrichtung und/oder der mobilen Prozesseinrichtung am Arbeitsplatz aufweisen. Vorzugsweise umfasst die Positioniereinrichtung mechanische und/oder optische Positioniermittel.

Die Transportvorrichtung ist vorzugsweise als automatisches, selbstfahrendes Transportfahrzeug ausgebildet, das eigenständig lenken und navigieren kann. Mit einem optischen Positioniermittel kann die Transportvorrichtung während der Fahrt navigieren und sich gegenüber der Arbeitsstelle exakt positionieren. Mechanische Positioniermittel, z.B. Indexstifte und Aufnahmebohrungen, können für eine exakte Ausrichtung und Positionierung der oberen Klemmbacke mit dem Industrieroboter gegenüber dem Arbeitsplatz dienen. Hierdurch hat der Industrieroboter sofort die erforderliche örtliche Referenz gegenüber dem Prozessbereich. Zudem kann die Sicherheit im Fahrbetrieb erhöht und überwacht werden.

Die Ankoppeleinrichtung kann eine Sensoranordnung zur Detektion der korrekten Klemmung an der Klemmleiste bzw. Tischplatte aufweisen. Hierdurch werden Fehlstellungen der oberen Klemmbacke mit dem Industrieroboter in Klemmstellung vermieden. Ferner können Unfallgefahren erfasst und vermieden werden. Die Detektionseinrichtung weist bevorzugt eine an dem über die Tischplatte ragenden Klemmbackenrand umlaufende Sensoranordnung auf, die zur Leisten- oder Tischoberfläche gerichtet ist. Hierdurch kann festgestellt werden, ob die obere Klemmbacke hinreichend genau positioniert ist und die Leisten- oder Tischoberfläche im vorgesehenen Maß übergreift. Ferner können evtl. Fremdkörper im Klemmbereich detektiert und signalisiert werden. Die Detektionseinrichtung kann auch eine Messung der Antriebsenergie, insbesondere der Motorströme beinhalten. Die verschiedenen möglichen Fehlerfälle können z.B. durch eine gezielte Abfrage der Schaltzustände der Sensoranordnung in Kombination mit einer Messung der Antriebsenergie gesichert erkannt werden.

Die Ankoppeleinrichtung kann ferner eine Energiekopplung aufweisen. Diese kann z.B. vom Industrieroboter aktiviert und deaktiviert werden. Die mobile Prozesseinrichtung hat einen mitgeführten Energiespeicher, z.B. eine elektrische Batterie, wobei mit der Energiekopplung eine leitende Verbindung zu einer externen Energieversorgung am Arbeitsplatz hergestellt werden kann. Der Industrieroboter kann z.B. für die Energiekopplung ein mitgeführtes Stromkabel an einer Steckdose am Arbeitsplatz einstecken.

Die Prozesseinrichtung ist vorzugsweise für eine Mensch-Roboter-Kooperation oder -Kollaboration (MRK) vorgesehen und ausgebildet. Dies erlaubt den Einsatz der Prozesseinrichtung an manuellen Arbeitsplätzen und in unmittelbarer Nähe zu einem Werker. Hierdurch kann der Einsatzbereich der mobilen Prozesseinrichtung und ihres bevorzugten taktilen Industrieroboters wesentlich erweitert werden. Insbesondere ist eine hohe Flexibilität durch bedarfsweises Ankoppeln der Prozesseinrichtung an vielen verschiedenen und im Wesentlichen beliebigen Arbeitsplätzen möglich.

Die Ankoppeleinrichtung ist eine eigenständige Vorrichtung. Sie kann integraler Bestanteil einem mobilen Prozesseinrichtung sein und zu deren Erstausrüstung gehören. Sie kann alternativ an einer bestehenden Prozesseinrichtung nachgerüstet oder umgerüstet werden.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine Prozessstation mit einem Arbeitsplatz und einer angekoppelten mobilen Prozesseinrichtung sowie deren Klemmeinrichtung,
- Figur 2 u. 3:: verschiedene Betriebsstellungen beim Ankoppeln der Klemmeinrichtung an einer Tischplatte des Arbeitsplatzes,
- Figur 4:: eine Prozessstation gemäß Figur 1 in perspektivischer Ansicht,
- Figur 5:: eine abgebrochene Darstellung einer Klemmbacke der Klemmeinrichtung mit einer Positionier- und Detektionseinrichtung,
- Figur 6 bis 8:: Varianten der Prozesseinrichtung und deren Ankoppelung,
- Figur 9 u. 10:: eine Funktionsdarstellung einer Detektionseinrichtung und
- Figur 11:: eine Ergänzung der Positioniereinrichtung von Figur 5.

Die Erfindung betrifft eine Ankoppeleinrichtung (8) und ein Ankoppelverfahren. Die Erfindung betrifft ferner eine mobile Prozesseinrichtung (5) mit einer solchen Ankoppeleinrichtung (8). Ferner bezieht sich die Erfindung auf eine Prozessstation (1) mit einem Arbeitsplatz (2) und einer mobilen Prozesseinrichtung (5) mit einer Ankoppeleinrichtung (8).

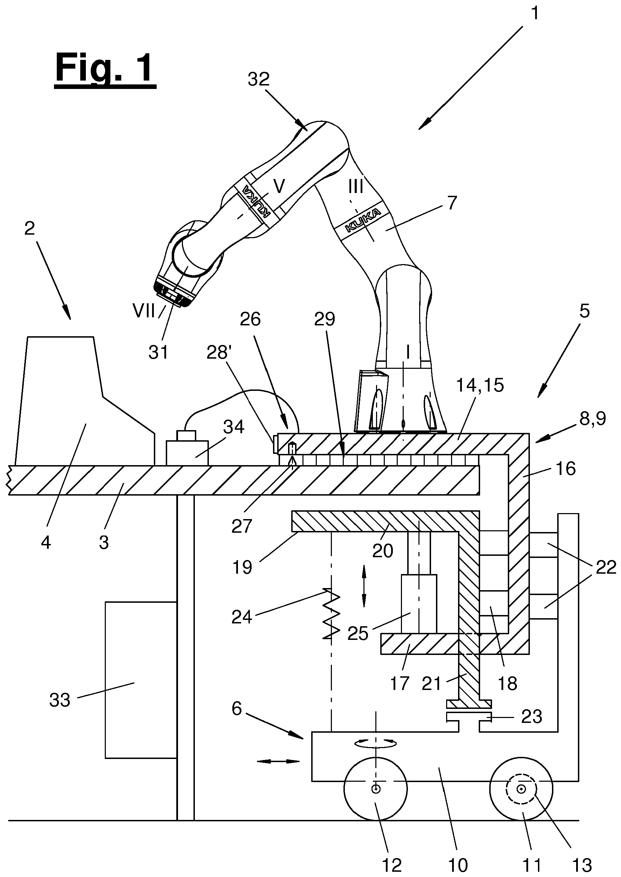

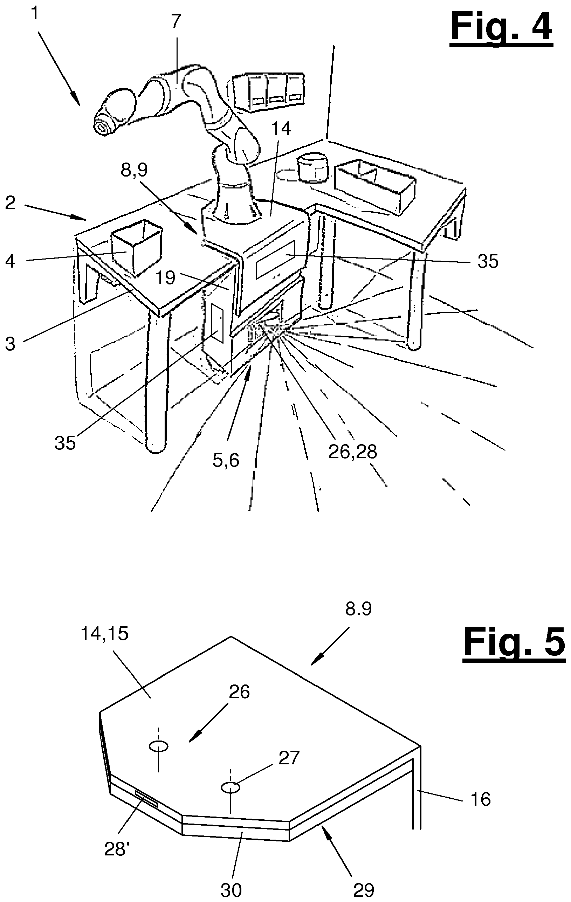

Figur 1 und 4 zeigen eine Prozessstation (1) mit einem Arbeitsplatz (2), an dem ein Arbeitstisch mit einer Tischplatte (3) stationär angeordnet ist. Auf der Tischplatte (3) befindet sich ein Prozessbereich mit einem Werkstück (4), an dem ein beliebiger Prozess, z.B. ein Füge- oder Montageprozess oder ein Bearbeitungsprozess oder dgl. ausgeführt werden kann. Die Tischplatte (3) ist mit Abstand vom Untergrund angeordnet. Die Ober- und Unterseite der Tischplatte (3) sind vom freien Tischrand her zugänglich. Die Tischplatte (3) ist auf diskreten und distanzierten Füßen und/oder über eine Wandbefestigung abgestützt.

Der besagte Prozess kann manuell durch einen Werker (nicht dargestellt) und zusätzlich oder alternativ voll- oder halbautomatisch mittels einer mobilen Prozesseinrichtung (5) durchgeführt werden. Die Prozesseinrichtung (5) weist einen programmierbaren Industrieroboter (7) und eine Transportvorrichtung (6) für den Industrieroboter (7) auf. Der Industrieroboter (7) kann ggf. mehrfach vorhanden sein.

Die nachfolgend näher erläuterte Transportvorrichtung (6) ist vorzugsweise flurgebunden und weist mehrere Räder (11,12) sowie einen steuerbaren Fahr- und Lenkantrieb (13) auf. Sie kann omnidirektional lenkbar auf einem Untergrund, z.B. einem Anlagenboden, fahren. Sie kann mittels einer Positioniereinrichtung (26), insbesondere eines optischen Positioniermittels (28), navigieren und in die in Figur 1 und 4 gezeigte Ankoppelstellung am Arbeitsplatz (2) fahren.

Die gezeigte Transportvorrichtung (6) ist als führerloses, automatisches, selbstfahrendes und selbstlenkendes Transportfahrzeug ausgebildet, z.B. als FTF oder AGV. Für die omnidirektionale Beweglichkeit können geeignete Abtriebsmittel, z.B. Mecanum-Räder, vorhanden sein. Alternativ kann die Transportvorrichtung (6) als antriebsloses manuell zu bewegendes Transportfahrzeug ausgebildet sein.

Der mehrgliedrige Industrieroboter (7) weist mehrere Roboterachsen (I-VII) und eine Robotersteuerung (nicht dargestellt) auf.

Der Industrieroboter (7) ist vorzugsweise als taktiler Roboter mit einer zugeordneten Sensorik (32) zur Erfassung von extern einwirkenden mechanischen Belastungen ausgebildet. Der Industrieroboter (7) ist vorzugsweise stehend auf der Transportvorrichtung (6) angeordnet. Er kann alternativ hängend oder in anderer Lage an der Transportvorrichtung (6) angeordnet sein.

Zum Ankoppeln der mobilen Prozesseinrichtung (5) am Arbeitsplatz (2) ist eine Ankoppeleinrichtung (8) vorgesehen. Diese weist z.B. eine Klemmeinrichtung (9) auf. Die steuerbare Klemmeinrichtung (9) weist eine oder mehrere, insbesondere zwei, Klemmbacke(n) (14,19) und ein Spannmittel (25) auf. In den bevorzugten Ausführungsformen sind eine obere Klemmbacke (14) und eine weitere untere Klemmbacke (19) vorhanden. Die Klemmbacke(n) (14,19) ist/sind zumindest bereichsweise plattenartig ausgebildet.

Die Ankoppeleinrichtung (8) kann außerdem ein oder mehrere steuerbare seitliche Ankoppelmittel (35), z.B. Elektromagnete, zum alternativen Ankoppeln an Seitenwände eines Arbeitsplatzes (2) aufweisen. Ein Ankoppelmittel (35) kann z.B. gemäß Figur 4 an der Transportvorrichtung (6) und/oder an einer oberen Klemmbacke (14) angeordnet sein.

Die Klemmeinrichtung (9) dient zur Bildung einer die Prozesseinrichtung (5) am Arbeitsplatz (2) fixierenden Klemmverbindung. Die Klemmverbindung wird zwischen einer einzelnen Klemmbacke (14,19) oder beiden Klemmbacken (14,19) und einer Klemmleiste (3) am Arbeitsplatz (2) gebildet. Die mindestens eine Klemmbacke (14,15) ist vorzugsweise parallel zur Klemmleiste (3), insbesondere horizontal, ausgerichtet.

Die Klemmleiste (3) wird im gezeigten Ausführungsbeispiel von der horizontalen Tischplatte gebildet. Die Klemmstelle befindet sich in der Nähe des besagten Prozessbereichs auf dem Arbeitstisch. In einer anderen Ausführungsform kann die Klemmleiste (3) als separate horizontale Leiste ausgebildet und an anderer Stelle des Arbeitsplatzes (2), insbesondere des Arbeitstisches, einer Wand oder dgl., fest angeordnet sein. Die nachfolgende Beschreibung nimmt auf eine Tischplatte (3) Bezug und gilt entsprechend auch für andere Arten von Klemmleiste.

Die Klemmeinrichtung (9) kann zum Anbau an der mobilen Prozesseinrichtung (5), insbesondere an der Transportvorrichtung (6) vorgesehen und ausgebildet sein. Die Klemmeinrichtung (9) kann ferner zur Aufnahme und Abstützung des oder der Industrieroboter (7) vorgesehen und ausgebildet sein. Die Klemmeinrichtung (9) kann ein integraler Bestandteil der mobilen Prozesseinrichtung (5) sein. Sie kann bei der Erstausrüstung eingebaut oder nachgerüstet bzw. gegen eine vorhandene Ankoppeleinrichtung getauscht und umgerüstet werden.

Die Klemmeinrichtung (9) kann zu Klemmzwecken in sich beweglich sein und kann relativ zueinander bewegliche Komponenten aufweisen. Sie kann außerdem relativ zu der Transportvorrichtung (6), insbesondere zu deren Basis oder Fahrgestell (10), bewegt werden. Die vorgenannten Relativbewegungen sind vorzugsweise linear. Sie können alternativ rotatorisch oder kombiniert linear/rotatorisch sein. Die Führungen und Antriebe für die besagten Relativbewegungen sind entsprechend ausgebildet.

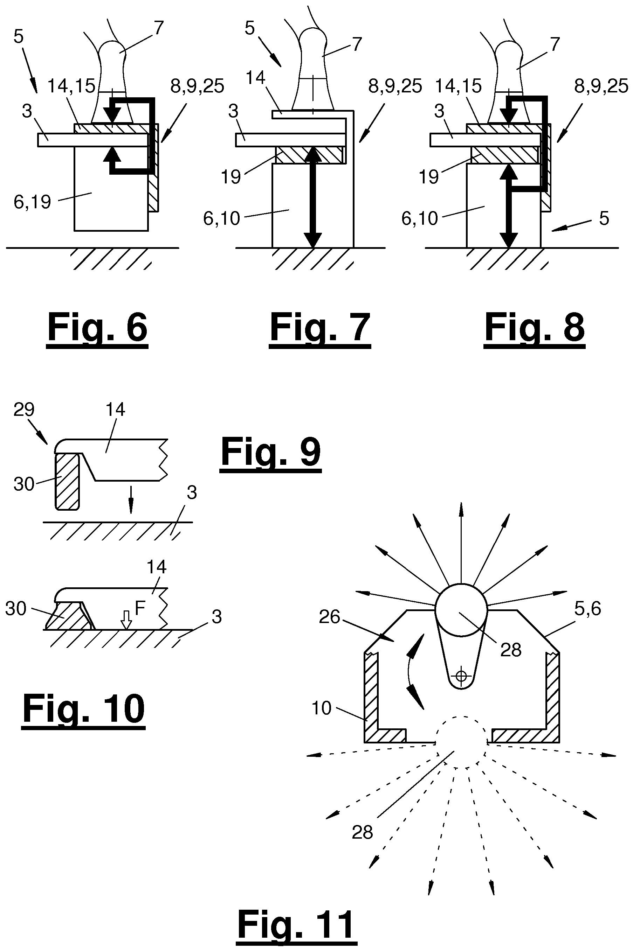

Für die Ausgestaltung der Klemmeinrichtung (9) gibt es verschiedene Möglichkeiten. Figur 1 bis 3 zeigen ein bevorzugtes Ausführungsbeispiel. In Figur 6 bis 8 sind Varianten dargestellt.

Im Ausführungsbeispiel von Figur 1 bis 3 weist die Klemmeinrichtung (9) mehrere, insbesondere zwei, parallele und relativ zueinander bewegliche Klemmbacken auf (14,19), welche die Klemmleiste (3) zwischen sich einklemmen. Die Klemmbacken (14,19) sind als abgewinkelte und einander übergreifende Profile ausgebildet, wobei das Spannmittel (25) zwischen den Klemmbacken (14,19) angeordnet ist.

Die Klemmbacken (14,19) sind mit verstellbarem Abstand über dem Untergrund und im Bereich der Tischplatte (3) bzw. der Arbeitshöhe angeordnet. Die horizontalen Klemmbacken (14,19) sind bereichsweise plattenartig ausgebildet und klemmen dort die Tischplatte (3) von oben und unten sowie flächig zwischen sich ein.

Die obere Klemmbacke (14) ist als Träger für den oder die Industrieroboter (7) ausgebildet. Sie weist hierfür einen Roboteranschluss mit einer definierten Position auf. Die untere Klemmbacke (19) bildet einen Gegenhalter.

Die obere Klemmbacke (14) ist im Querschnitt als C-förmiges Profil ausgebildet. Sie weist einen oberen liegenden Schenkel (15), einen daran rückseitig anschließenden aufrechten Schenkel (16) und an dessen Unterseite einen anschließenden zweiten liegenden Schenkel (17) auf. Der obere liegende bzw. horizontale Schenkel (15) bildet den besagten Träger mit dem Roboteranschluss an seiner Oberseite.

Die untere Klemmbacke (19) ist im Querschnitt L-förmig ausgebildet und weist einen horizontalen bzw. liegenden oberen Schenkel (20) und einen daran anschließenden abwärts gerichteten aufrechten Schenkel (21) auf. An dessen unterem Ende kann ein Anschlag (23) angeordnet sein, der gegenüber der Transportvorrichtung (6) wirkt.

Die beiden Klemmbacken (14,19) sind relativ zueinander in der Höhe bzw. in der Vertikalen beweglich gelagert. Sie übergreifen einander, wobei der untere Querschenkel (17) und der aufrechte Schenkel (21) einander mit aufrechtem Bewegungsspielraum durchdringen. Zwischen den Klemmbacken (14,19), insbesondere ihren aufrechten Schenkeln (16,21), ist eine Führung (18) angeordnet. Sie führt die Relativbewegung der Klemmbacken (14,19) in der Vertikalen.

Die Klemmeinrichtung (9), insbesondere die obere Klemmbacke (14), ist mittels einer weiteren Führung (22) an der Transportvorrichtung (6), insbesondere an deren Basis oder Fahrgestell (10), höhenverstellbar gelagert und geführt. Die untere Klemmbacke (19) wird bei einer Höhenverstellung mitgenommen. Sie kann alternativ oder zusätzlich auch eine eigene höhenverstellbare Lagerung und Führung an der Basis (10) aufweisen.

Das Spannmittel (25) ist im gezeigten Ausführungsbeispiel zwischen den Klemmbacken (14,19), insbesondere zwischen deren querliegenden bzw. horizontalen Schenkeln (17,20), angeordnet. Es hat eine steuerbare Brems- oder Arretiereinrichtung. Das Spannmittel (25) kann gesteuert ein- und ausgefahren werden und ist z.B. als fluidischer, insbesondere pneumatischer Zylinder ausgebildet. Alternativ sind andere konstruktive Gestaltungen, z.B. als motorischen Spindel- oder Zahnstangentrieb, als Scherenantrieb oder dgl. möglich.

Das Spannmittel (25) kann eine eigene Steuerung aufweisen und/oder an eine übergeordnete Steuerung der mobilen Prozesseinrichtung (5) angeschlossen sein. Das Spannmittel (25) kann auch selbsthemmend ausgeführt sein. Es kann ferner eine zugeordnete Sensorik zur Parametererfassung, insbesondere zur Weg- und/oder Kraftmessung, aufweisen.

An der untere Klemmbacke (19) greift in der gezeigten Ausführung ein Rückholmittel (24) an, welches die untere Klemmbacke (19) bei Deaktivierung des Spannmittels (25) gegen den Anschlag (23) und in eine dortige Ausgangsstellung bewegt. Das vertikal wirkende und an der Basis (10) abgestützte Rückholmittel (24) kann z.B. als Feder ausgebildet sein und ggf. eine Dämpfung aufweisen. In einer anderen Ausführung kann es das Eigengewicht der Klemmbacke (19) bzw. die Schwerkraft sein.

Über das Spannmittel (25) und das Rückholmittel (24) kann die Ausgangslage der Klemmbacken (14,19) und der Spalt zwischen deren Querschenkeln (15,20) eingestellt und gehalten werden. Mit diesem voreingestellten Spalt kann die Klemmeinrichtung (9) durch eine Fahrbewegung der mobilen Prozesseinrichtung (5) vom vorderen Tischplattenrand aus über die Tischplatte (3) geschoben werden. Zur Bildung der Klemmverbindung werden die Klemmbacken (14,19) aufeinander zu und gegen die Tischplatte oder Klemmleiste (3) bewegt.

Die Relativbewegungen der Klemmeinrichtung (9) können situationskonform, z.B. in der Klemmstellung, zusätzlich blockiert werden. Dies kann in beliebig geeigneter Weise, z.B. durch eine Bremse oder dgl. an einer oder mehreren Führungen (18,22), erfolgen. Die mobile Prozesseinrichtung (5), insbesondere die Transportvorrichtung (6), kann sich dadurch sowohl an der Klemmleiste (3) bzw. am Tisch, als auch am Untergrund abstützen. Dies kann die Steifigkeit und die Positioniergenauigkeit im Prozess erhöhen.

Figur 1 verdeutlicht die Ausgangsposition mit geöffnetem Spalt zwischen den Schenkeln (15,20), wobei diese den Randbereich der Tischplatte (3) übergreifen. An den Schenkeln (15,20) sind die horizontalen Klemmflächen für die Klemmverbindung angeordnet.

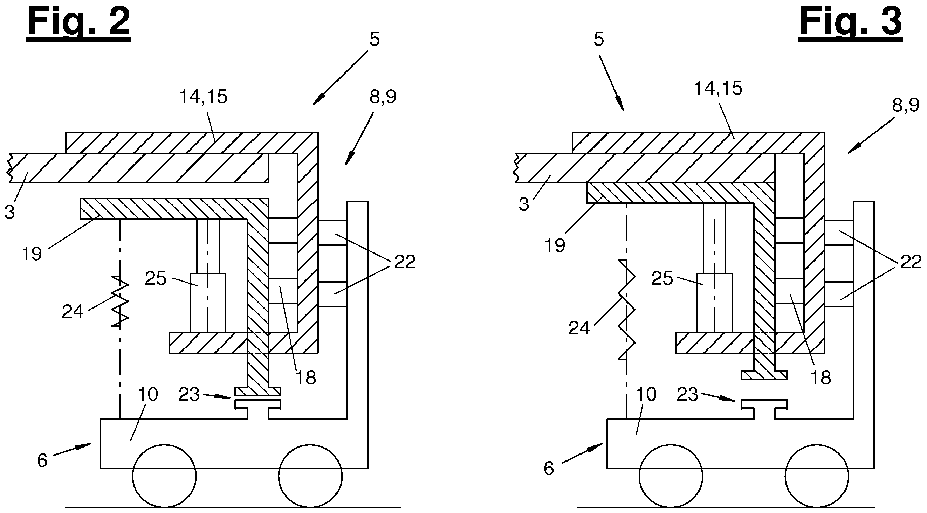

Figur 2 verdeutlicht die nächste Betriebsstellung, in der das Spannmittel (25) zunächst die obere Klemmbacke (14) absenkt und deren Schenkel (15) in Kontakt mit der Oberseite der Tischplatte (3) bringt. Die untere Klemmbacke (19) ruht auf dem Anschlag (23) und wird hier vom Rückholmittel (24) gehalten.

In der nächsten Betriebsstellung gemäß Figur 3 wird das Spannmittel (25) ausgefahren und spreizt sich zwischen die Klemmbacken (14,19), wobei die obere Klemmbacke (14) am Arbeitstisch (3) abgestützt ist und die untere Klemmbacke (19) angehoben und mit ihrem oberen Schenkel (20) in Klemmkontakt mit der Unterseite der Tischplatte (3) gebracht wird. Hierbei wird der Kontakt zum Anschlag (23) gelöst und das Rückholmittel (24) gespannt. In dieser Klemmstellung sind die Klemmeinrichtung (9) und die mobile Prozesseinrichtung (5) an der Tischplatte (3) und am Arbeitsplatz (2) fixiert und positioniert.

Zumindest eine der Klemmbacken (14,19), insbesondere deren Querschenkel (15,20), kann an die Formgebung der Klemmleiste bzw. Tischplatte (3) adaptiert werden. Besonders für die untere Klemmbacke (19) kann dadurch eine sichere Klemmverbindung trotz Anbauten, z.B. Tragholmen, an der Platten- oder Leistenunterseite gebildet werden. Die Adaption kann durch Einlegeplatten oder andere bevorzugt druckfeste Adaptionsmittel (nicht dargestellt) gebildet werden, welche die Anbauten aussparen.

Die Transportvorrichtung (6) weist die erwähnte Basis (10) auf, die ein Fahrgestell bilden kann und die rückseitig eine aufrechte Wand oder Stütze für die Führung (22) aufweist. Die Basis kann in der Draufsicht eine nach vorn verjüngte bzw. etwa dreieckige Form haben. Ihre Breite ist größer als ihre Länge. Die Basis (10) kann einen Korpus mit einem Boden und mit einer oder mehreren Seitenwänden aufweisen.

An der Basis (10) ist das Fahrwerk mit mehreren Rädern (11,12) angeordnet. In der gezeigten Ausführungsform sind drei Räder (11,12) vorhanden, die in der Draufsicht in einem gleichschenkligen Dreieck angeordnet sind. Die hinteren parallelen Räder (11) fluchten mit ihren Drehachsen und weisen jeweils ein eigenes und einzeln steuerbares Antriebsmittel, z.B. einen Elektromotor, auf. In Figur 1 bis 3 ist in der Seitenansicht und in der besagten Breitenrichtung gesehen nur ein Rad (11) sichtbar.

Die vordere Rolle (12) ist z.B. frei drehbar gelagert und kann außerdem um eine in Figur 1 angedeutete Hochachse schwenken. Sie bildet eine Nachlauf- oder Lenkrolle und befindet sich etwa in der Mitte zwischen den rückwärtigen Rädern (11).

Die Transportvorrichtung (6) weist den vorgenannten Fahr- und Lenkantrieb (13) auf. Diese wird z.B. durch die beiden einzeln steuerbaren Antriebsmittel der Räder (11) gebildet. Die Räder (11) können dadurch gleichsinnig oder gegensinnig und mit gleichen oder unterschiedlichen Geschwindigkeiten einschließlich eines Radstopps angetrieben werden. Bei gleichsinniger Drehung mit gleicher Geschwindigkeit erfolgt eine Geradeausfahrt in Vorwärts- oder Rückwärtsrichtung gemäß Pfeil von Figur 1. Bei Blockade eines Rades und Drehung des anderen Rades (11) erfolgt ein Wenden auf der Stelle bzw. mit einem sehr engen Wenderadius. Entsprechendes geschieht, wenn die beiden Räder (11) gegensinnig angetrieben werden. Wenn beide Räder (11) bezogen auf ihre gemeinsame Drehachse gleichsinnig und mit unterschiedlichen Geschwindigkeiten angetrieben werden, wird eine Kurve mit einem vom Geschwindigkeitsunterschied abhängigen Kurvenradius in Vorwärts- oder Rückwärtsrichtung gefahren.

Die Transportvorrichtung (6) kann sich durch den Fahr- und Lenkantrieb (13) auf engstem Raum und in beliebige Richtungen bewegen. Der Fahr- und Lenkantrieb (13) kann mit einer eigenen Steuerung versehen sein und/oder an eine übergeordnete Steuerung der mobilen Prozesseinrichtung (5) angeschlossen sein.

Die Ankoppeleinrichtung (8) weist eine Positioniereinrichtung (26) für die Positionierung der Klemmeinrichtung (9) und/oder der mobilen Prozesseinrichtung (5) am Arbeitsplatz (2) auf. Die Positioniereinrichtung (26) kann ein oder mehrere Positioniermittel (27,28) aufweisen. Diese können von beliebiger Art sein. In der gezeigten Ausführungsform werden mechanische Positioniermittel (27) und optische Positioniermittel (28) eingesetzt.

Wie Figur 1 und 5 verdeutlichen, dient die Positioniereinrichtung (26) zur exakten Positionierung der oberen Klemmbacke (14) am Arbeitstisch (3). Hierüber wird auch der Industrieroboter (7) in eine exakte und vorgegebene Position am Arbeitsplatz (2) und gegenüber dessen Prozessbereich gebracht. Während der Fahrt der Transportvorrichtung (6) können die Klemmbacke(n) (14,19) eine abgesenkte Position einnehmen. Dies senkt den Schwerpunkt und verbessert die Kippstabilität.

Für die exakte Positionierung werden ein oder mehrere mechanische Positioniermittel (27) eingesetzt. Diese können z.B. aus Zapfen oder Stiften an der Oberseite der Tischplatte (3) und passenden Aufnahmebohrungen an der Unterseite der Klemmbacke (14), insbesondere des Schenkels (15), bestehen. Zum Zwecke der Positionierung kann der Fahr- und Lenkantrieb (13) abgeschaltet oder weichgeschaltet werden, so dass durch die Positioniermittel (27) eine Nachführung der Transportvorrichtung (6) möglich ist.

Ein anderes und bevorzugt optisches Positioniermittel (28) kann an der Andockeinrichtung (9) oder an der Transportvorrichtung (6) angeordnet sein. Es kann z.B. als elektronische Kamera ausgebildet sein und zum Navigieren der Transportvorrichtung (6) während der Fahrt und bei der Annäherung und Positionierung am Arbeitsplatz (2) benutzt werden. Das optische Positioniermittel (28) ist z.B. als digitale Messkamera ausgebildet, welche die Umgebung erfasst und vermisst. Es kann alternativ als Laserscanner oder in anderer geeigneter Weise ausgeführt sein. Das optische Positioniermittel (28) kann die Relativlage der Transportvorrichtung (6) gegenüber der Umgebung, insbesondere dem Arbeitstisch und anderen Gegenständen am Arbeitsplatz (2) erfassen.

Das Positioniermittel (28) kann einzeln oder mehrfach vorhanden sein. Es befindet sich vorzugsweise an der Front- und/oder Heckseite der Transportvorrichtung (6). Ein einzelnes optisches Positioniermittel (28) kann z.B. mittels einer steuerbaren Stelleinrichtung wahlweise an der Front- oder Rückseite positioniert werden. Figur 11 zeigt schematisch in einer aufgebrochenen Draufsicht eine solche zwischen verschiedenen Funktionsstellungen verstellbare, insbesondere schwenkbare Anordnung eines optischen Positioniermittels (28) mit durchgezogener und gestrichelter Darstellung von zwei Funktionslagen.

Ein weiterer Aspekt eines kostengünstigen Aufbaus betrifft diese Verwendung von nur einem optischen Positioniermittel (28), z.B. einem Laserscanner, gemäß Figur 11 zu Navigations- und Sicherheitszwecken. Standardmäßig ist dieser mit einem Sichtfeld von ca. 180° nach vorne schauend (gemäß der durchgezogenen Darstellung) orientiert. Sollte die mobile Prozesseinrichtung (5) in engen Situationen nicht wenden können, wie beispielsweise unmittelbar nach dem Abdocken aus einer Ecke oder bei einem stirnseitigen Koppelungsvorgang, kann der Laserscanner im Strukturrahmen der Transportvorrichtung (6) zu einer anderen Seite, z.B. nach hinten, bewegt und dabei z.B. geschwenkt werden. Diese Stellung ist gestrichelt dargestellt. Hierzu ist der Laserscanner beweglich, insbesondere drehbar an einem Träger aufgehängt, der in beiden Endlagen schwingungsarm fixiert werden kann. Die Reduzierung der Struktursteifigkeit der Transportvorrichtung (6) ist durch das verwendete Klemmprinzip irrelevant. Zudem kann der nach hinten gerichtete Laserscanner nach dem Ankoppeln dazu genutzt werden, den Arbeitsbereich des Industrieroboters (7) abzusichern, insbesondere gegen unbefugten Zutritt, und Annäherungen von Personen an die Prozesseinrichtung (5) zu erkennen.

Ein ggf. zusätzliches optisches Positioniermittel (28') kann zur Positionierung der Klemmeinrichtung (9), insbesondere der oberen Klemmbacke (14), an der Klemmleiste (3) dienen. Hierüber kann auch der besagte Spalt zwischen den Klemmbacken (14,19) bzw. den Schenkeln (15,20) eingestellt werden. Das in Figur 1 und 5 angedeutete Positioniermittel (28') ist an geeigneter Stelle, z.B. am Frontende der oberen Klemmbacke (14), angeordnet und detektiert vor der Klemmung die Oberseite und/oder Unterseite der Klemmleiste (3). Dies kann z.B. bei Annäherung an den Arbeitsplatz (2) oder beim Hochfahren der oberen Klemmbacke (14) geschehen.

Die Ankoppeleinrichtung (8) kann ferner eine Detektionseinrichtung (29) aufweisen. Diese kann zur Detektion der korrekten Klemmung an der Tischplatte (3) und/oder zur Unfallsicherung dienen. Beim Klemmen wird eine Klemmbacke (14,19) mit flächiger Anlage und mit hoher Klemmkraft gegen die Klemmleiste (3) gedrückt.

Gemäß Figuren 1, 5, 9 und 10 kann die Detektionseinrichtung (29) z.B. eine am freien Randbereich der oberen Klemmbacke (14), insbesondere ihres Schenkels (15), befindliche Sensoranordnung (30) aufweisen. Die Sensoranordnung (30) kann an diesem Rand umlaufend angeordnet sein. Sie befindet sich an der Unterseite der Klemmbacke (14) bzw. des Schenkels (15) und weist zur Oberseite der Tischplatte (3).

Die Sensoranordnung (30) kann z.B. von einer Mehrzahl von Kontaktsensoren oder Drucksensoren, gegebenenfalls mit Anordnung in einem flexiblen Schlauch, gebildet werden. Sie stellt fest, ob sich Fremdkörper oder Körperteile im Klemmbereich befinden, die einen vollflächigen Kontakt der Klemmbacke (14) mit der Tischplatte (3) verhindern. Hierbei können verschiedene Fehlerfälle detektiert werden, bei denen sich z.B. ein Fremdkörper oder Körperteil am Rand oder im inneren bzw. zentralen Bereich der Klemmbacke (14) befindet oder ein zu kleines Tischsegment geklemmt wird. Außerdem kann eine eventuelle Schrägstellung zwischen der Klemmbacke (14) und der Tischplatte (3) detektiert werden, die z.B. durch eine großflächige und einseitige Klemmung hervorgerufen wird. Die genannte sensorische Detektion kann auch mit einer Messung der auftretenden Motorströme kombiniert werden. Bei Detektion solcher Fehler oder Störungen wird ein Warnsignal abgegeben und gegebenenfalls auch das Spannmittel (25) gestoppt oder reversiert.

Figur 9 und 10 zeigen eine abgebrochene und geschnittene Detaildarstellung zu Figur 5. Die Sensoranordnung (30) ist z.B. als elastische Schaltleiste ausgebildet, die in die Klemmbacke (14) an deren Unterseite und am Randbereich versenkt eingelassen ist. Die Schaltleiste wird bei Auftreffen auf der Tischplatte (3) so zusammengedrückt, dass die Klemmbacke (14) flach auf der Tischoberfläche aufliegt und die Kräfte F übertragen kann.

Die Positioniereinrichtung (26) und/oder Detektionseinrichtung (29) können an eine übergeordnete Steuerung der mobilen Prozesseinrichtung (5) oder der Klemmeinrichtung (9) angeschlossen sein.

Die Ankoppeleinrichtung (8) kann ferner eine in Figur 1 angedeutete Energiekopplung (34) aufweisen. Hierüber kann eine Energieverbindung zwischen einer externen, bevorzugt elektrischen Energieversorgung (33) am Arbeitsplatz (2) und der mobilen Prozesseinrichtung (5) bzw. der Ankoppeleinrichtung (8) geschaffen werden. Die Energiekopplung (34) kann z.B. aus einer an der Prozesseinrichtung (5) angeordneten und mitgeführten Energieleitung, insbesondere einem Stromkabel, und einem stationären Energieanschluss, z.B. einer Steckdose, am Arbeitsplatz (2), insbesondere an der Tischplatte (3) gebildet werden. Der programmierbare Industrieroboter (7) kann die Energiekopplung (34) aktivieren und deaktivieren, indem er z.B. einen Stecker an der Energieleitung greift und in die Energieversorgung einsteckt und wieder aussteckt. Die Prozesseinrichtung (5), insbesondere deren Transportvorrichtung (6), kann einen mitgeführten Energiespeicher, z.B. eine elektrische Batterie (nicht dargestellt), aufweisen, die mit der Energiekopplung (34) verbunden ist.

In Figur 6 bis 8 sind Varianten der Ankoppeleinrichtung (8) und ihrer Klemmeinrichtung (9) angegeben. Der jeweilige Klemmkraftfluss ist durch Pfeile dargestellt. Die anderen Komponenten der mobilen Prozesseinrichtung (5), insbesondere die Positioniereinrichtung (26) und die Detektionseinrichtung (29) können in der gleichen oder in einer ähnlichen, angepassten Weise wie in den vorbeschriebenen Ausführungsbeispielen ausgebildet sein.

Figur 6 zeigt eine vereinfachte Variante einer Ankoppeleinrichtung (8) und deren Klemmeinrichtung (9). Die Klemmeinrichtung (9) kommt mit einer einzelnen oberen Klemmbacke (14) aus, die z.B. die gezeigte abgewinkelte L-Form oder eine geeignete andere Form aufweist. Der Gegenhalter (19) kann von der Transportvorrichtung (6), z.B. von deren Basis (10) bzw. Korpus, gebildet werden. Das Spannmittel (25) wirkt zwischen der Klemmbacke (14) und dem Gegenhalter (19) bzw. der Transportvorrichtung (6), wobei die Klemmleiste (3) zwischen dem Trägerschenkel (15) und dem Gegenhalter (19) geklemmt wird. Beim Spannen und Festklemmen kann ggf. die Transportvorrichtung (6) angehoben werden. Die Klemmung erfolgt von oben, indem die Klemmbacke (14) mit dem Trägerschenkel (15) über den Tisch (3) fährt und anschließend soweit abgesenkt wird, dass sie auf der Tischoberfläche aufliegt und sich abstützt, wobei mit der weiteren Spannbewegung die Transportvorrichtung (6) bzw. der Gegenhalter (19) nach oben gezogen wird. Bei dieser Variante kann eine andere Art von Vorpositioniereinrichtung für die Ausgangsstellung der Klemmbacke (14) vorhanden sein.

In der zweiten Variante von Figur 7 ist nur eine untere Klemmbacke (19) vorhanden. Der Träger (14) für den Industrieroboter (7) ist mit der Transportvorrichtung (6) starr verbunden und ist mit einem hinreichenden Abstand über der Tischoberseite (3) und über der Basis (10) angeordnet. Die untere Klemmbacke (19) ist auf der Transportvorrichtung (6) angeordnet. Sie wird von dem an der Transportvorrichtung (6) abgestützten Spannmittel (25) beaufschlagt und zum Festklemmen am Tisch (3) angehoben. Bei dieser Variante erfolgt die Klemmung von unten, wobei eine Verspannung zum Boden hin erfolgt.

Figur 8 zeigt eine dritte Variante, die Ähnlichkeiten mit dem Ausführungsbeispiel von Figur 1 bis 3 hat. In dieser Variante sind zwei Klemmbacken (14,19) vorhanden, die jeweils an der Transportvorrichtung (6) abgestützt und geführt sind und mit einem gemeinsamen oder einem jeweils eigenen Spannmittel (25) beaufschlagt werden. Der Trägerschenkel (15) der Klemmbacke (14) wird nach unten gegen die Tischoberseite gezogen und die untere Klemmbacke (19) nach oben gegen die Tischunterseite gedrückt. Die Transportvorrichtung (6) bleibt auf dem Boden stehen, während die Tischplatte (3) beidseitig geklemmt wird.

Die Prozesseinrichtung (5) ist für eine Mensch-Roboter-Kooperation oder -Kollaboration (MRK) vorgesehen und ausgebildet. Dies kann sowohl die Ausbildung des Industrieroboters (7), als auch die Ausbildung der Transportvorrichtung (6) und gegebenenfalls auch der Klemmeinrichtung (9) betreffen. Hierbei können eventuelle und nicht vorhergesehene Kollisionen mit einem Werker detektiert werden. Außerdem können die Antriebskräfte bzw. -momente und die Bewegungsgeschwindigkeiten der beweglichen Komponenten der Prozesseinrichtung (5) und der Ankoppeleinrichtung (8) bzw. Klemmeinrichtung (9) auf MRK-taugliche Werte begrenzt werden. Hierdurch können Verletzungen des Werkers im Falle einer Kollision vermieden werden. Es kann auch zu verletzungsfreien Kontakten mit dem Werker kommen.

Die Positioniereinrichtung (26), insbesondere das Positioniermittel (28') ermöglicht ferner eine Minderung der Quetschgefahr für den Werker. Die obere Klemmbacke (14) kann mit einem geringen und quetschfreien Höhenabstand von z.B. ca. 4 mm über der Klemmleiste (3) positioniert werden, bevor die Transportvorrichtung (6) die Klemmeinrichtung (9) über die Klemmleiste (3) bzw. den Arbeitstisch bewegt. Eine sensorische Kraftmessung am Spannmittel (25) erlaubt eine Überwachung der Klemmkraft und der Einquetschgefahr für den Werker. Ferner kann die Sensoranordnung (30) schräg nach außen weisen. Sie kann dadurch eine Kollision mit dem Werker oder mit Gegenständen beim flachen Überfahren der Klemmleiste (3) bzw. des Arbeitstisches detektieren. Die Steuerung kann dann entsprechende Sicherheitsmaßnahmen auslösen.

Der in Figur 1 dargestellte Industrieroboter (7) ist vorzugsweise als taktiler Roboter ausgebildet, der sensitive Fähigkeiten hat und der ggf. auch bei einer Mensch-Roboter-Kollaboration (MRK) eingesetzt werden kann.

Der Industrieroboter (7) weist mehrere Roboterglieder und mehrere angetriebene Roboterachsen (I-VII) auf. Er kann eine beliebige Zahl und Konfiguration von translatorischen und/oder rotatorischen Roboterachsen haben. In der gezeigten Ausführungsform ist der Industrieroboter (7) als Gelenkarmroboter oder Knickarmroboter ausgebildet und hat sieben rotatorische Roboterachsen (I-VII).

Der Industrieroboter (7) weist gemäß Figur 1 mehrere, z.B. drei, vier oder mehr, bewegliche und miteinander verbundene Roboterglieder auf. Die Roboterglieder sind gelenkig und über drehende Roboterachsen (I-VII) miteinander und mit einem Sockel verbunden. Der Sockel ist mit dem Roboteranschluss verbunden. Er kann einen Anschluss für Betriebsmittel haben und kann ggf. die Robotersteuerung aufnehmen. Es ist ferner möglich, dass einzelne Roboterglieder mehrteilig und in sich beweglich, insbesondere um die Längsachse verdrehbar, ausgebildet sind.

Der Industrieroboter (7) weist am Ende ein Abtriebsglied (31) mit einem vorzugsweise drehbaren Abtriebselement auf, welches in der gezeigten Ausführungsform mit einem Prozesswerkzeug (nicht dargestellt) direkt oder mittelbar über eine Wechselkupplung oder Medienkupplung verbunden ist. Die letzte Roboterachse (VII) bildet die drehende Abtriebsachse des Abtriebselements. Die Zuführung von Betriebsmitteln zum Prozesswerkzeug von einer mitgeführten oder externen Betriebsmittelversorgung kann intern über eine innere Leitungsführung in hohlen Robotergliedern und eine Medienkupplung erfolgen. Betriebsmittel können z.B. elektrische Signal- oder Leistungsströme, Druckluft, Hydraulikflüssigkeit, Kühlmittel oder dgl. sein.

Dem Industrieroboter (7) ist die besagte Sensorik (32) zugeordnet, mit der von außen einwirkende mechanische Belastungen, insbesondere Kräfte und/oder Momente, erfasst werden können. Dies können insbesondere die vom Prozess zurückwirkenden Reaktionskräfte oder -momente sein. Der Industrieroboter erhält über die Sensorik (32) die besagten taktilen Eigenschaften und sensitiven Fähigkeiten. Diese können zum Suchen der Prozessstelle am Werkstück (4), zum dortigen Positionieren des Prozesswerkzeugs und bei der Ausführung des Prozesses sowie zur Kollisionskontrolle bei der Fahrt eingesetzt werden.

Die zugeordnete Sensorik (32) ist vorzugsweise in den Industrieroboter (7), insbesondere in dessen Roboterglieder, integriert. Die Sensorik (32) kann einen oder mehrere Sensoren, insbesondere Kraftsensoren und/oder Momentensensoren und ggf. Weg- oder Positionssensoren aufweisen, die jeweils bevorzugt an einer Lagerstelle und/oder einem Antrieb einer Roboterachse angeordnet sind. In einer alternativen Ausführungsform kann die Sensorik (32) an anderer Stelle, z.B. zwischen dem Abtriebselement und dem Prozesswerkzeug, angeordnet sein.

Die Roboterachsen weisen jeweils ein Achslager, insbesondere ein Drehlager, und einen hier zugeordneten und integrierten steuerbaren, ggf. regelbaren Achsantrieb, z.B. Drehantrieb, auf. Ferner können die Roboterachsen eine steuer- oder schaltbare Bremse, z.B. für den Fahrbetrieb, und die erwähnte, ggf. redundante Sensorik (32), zur Detektion von extern einwirkenden mechanischen Belastungen haben.

Der Industrieroboter (7) kann eine oder mehrere kraftgeregelte oder kraft- und positionsgeregelte Roboterachsen bzw. Achsantriebe haben. Er kann ferner eine Nachgiebigkeitsregelung haben, die ihn bei Überschreiten einer Überlastungsschwelle ausweichen oder federnd zurückweichen lässt. Die besagte Kraftsteuerung oder Kraftregelung der Roboterachsen bezieht sich auf die Wirkung nach außen am Abtriebselement des Abtriebsglieds (31), sowie auf die dort einwirkenden Reaktionskräfte. Roboterintern findet an den Roboterachsen oder Achsantrieben eine Momentensteuerung oder Momentenregelung statt.

Der taktile Industrieroboter (7) kann verschiedene Betriebsmodi mit unterschiedlichen Steifigkeiten bzw. Nachgiebigkeiten seiner Roboterachsen haben. Dies kann z.B. ein Handführmodus, ein Positionier- oder Suchmodus und ein Steifigkeitsmodus sein. Zwischen den Betriebsmodi kann bedarfsweise umgeschaltet werden.

Der bevorzugte taktile Industrieroboter (7) ist für eine MRK vorgesehen und tauglich ausgebildet. Seine ein oder mehrere nachgiebigen Roboterachsen vermeiden Unfälle mit einem Werker und Crashs mit Gegenständen im Arbeitsbereich durch Kraftbegrenzung und ggf. Stillstand oder federndes Ausweichen im Fall unvorhergesehener Kollisionen. Der taktile Industrieroboter (7) kann dadurch auch für einen MRK bei einer Teilautomatisierung eingesetzt werden. Er kann auf einen Berührungskontakt mit dem menschlichen Körper unter Vermeidung von Verletzungen reagieren. Es kann dabei auch zu schmerzfreien Kontakten kommen.

Der taktile Industrieroboter (7) kann als Leichtbauroboter ausgebildet sein und aus leichtgewichtigen Materialien, z.B. Leichtmetallen und Kunststoff, bestehen. Er hat auch eine kleiner Baugröße. Zudem kann er eine niedrige Tragkraft von z.B. 5 bis 20kg haben. Das Prozesswerkzeug hat ebenfalls ein geringes Gewicht.

Abwandlungen der gezeigten und beschriebenen Ausführungsformen sind in verschiedener Weise möglich. Insbesondere können die Merkmale der verschiedenen Ausführungsbeispiele und der vorgenannten Varianten beliebig miteinander kombiniert, insbesondere auch vertauscht werden.

Die Klemmvorrichtung (9) kann mit einer einzelnen oberen Klemmbacke (14) auskommen, wobei das Spannmittel (25) z.B. von unten gegen die Tischplatte (3) oder eine andere Klemmleiste drückt. Hierbei kann eine andere Art von Vorpositioniereinrichtung für die Ausgangsstellung der Klemmbacke (14) vorhanden sein. Beim Spannen und Festklemmen kann ggf. auch die Transportvorrichtung (6) angehoben werden.

Die Detektionseinrichtung (29) kann ein oder mehrere Detektionsmittel aufweisen, die z.B. mit der Positionierenrichtung (26) bzw. mit einem Positioniermittel (27,28) gekoppelt sind. Bei einem mechanischen und Positioniermittel (27) kann sich z.B. in der Positionieröffnung eine Schaltleiste befinden. Ferner können die Sensoren der Sensoranordnung (30) in anderer Weise, z.B. als Näherungssensoren oder Kontaktschalter oder dgl. ausgebildet sein.

Variabel ist auch die konstruktive Ausgestaltung der ein oder mehreren Klemmbacken (14,19) und deren Führung (en) (18,22). Gleiches gilt für die Ausbildung und Anordnung des Spannmittels (25). Dieses kann auch mehrfach vorhanden sein, wobei z.B. jede Klemmbacke (14,19) ein eigenes Spannmittel aufweist. Ein Spannmittel (25) kann außerdem an der Transportvorrichtung (6), insbesondere der Basis (10), abgestützt sein.

Das Fahrwerk kann anders ausgebildet sein. Es kann z.B. eine gesteuert lenkbare vordere Rolle (12) mit einem Lenkantrieb und hintere Treibrollen (11) mit einem gemeinsamen Fahrantrieb aufweisen.

Besitzt die Arbeitsplatte (3) eine aufrechte Seitenabdeckfläche, kann diese genutzt werden, indem die mobile Prozesseinrichtung (5) über ein oder mehrere Ankoppelmittel (35), z.B. Elektro-Magneten, an verschieden Seiten an den Arbeitsplatz (2) gezogen wird. Hierbei sind z.B. Eck- und Stirnseitenanordnung möglich. Die Seitenflächen des Arbeitsplatzes (2) kann aus eisenhaltigem Material bestehen, das ggf. auch lokal nachgerüstet werden kann. Die obere höhenverstellbare Klemmbacke (14) kann an der Rückseite ein Ankoppelmittel (35) aufweisen und kann damit bündig an die Tischplatte (3) angekoppelt werden.

Die Ankoppeleinrichtung (8) mit dem Industrieroboter (7) kann dauerhaft oder austauschbar mit der Transportvorrichtung (6) verbunden sein. Dies ermöglicht Hol- und Bringdienste, z.B. durch einen Carrier.

### BEZUGSZEICHENLISTE

- 1: Prozessstation
- 2: Arbeitsplatz
- 3: Klemmleiste, Platte, Tischplatte
- 4: Werkstück
- 5: Prozesseinrichtung mobil
- 6: Transportvorrichtung
- 7: Industrieroboter
- 8: Ankoppeleinrichtung
- 9: Klemmeinrichtung
- 10: Basis, Fahrgestell
- 11: Rad angetrieben
- 12: Rad schwenkbar
- 13: Fahr- und Lenkantrieb
- 14: Träger, Klemmbacke
- 15: Trägerschenkel quer, Plattform
- 16: Trägerschenkel aufrecht
- 17: Trägerschenkel quer
- 18: Führung
- 19: Gegenhalter, Klemmbacke
- 20: Halterschenkel quer
- 21: Halterschenkel aufrecht
- 22: Führung
- 23: Anschlag
- 24: Rückholmittel, Feder
- 25: Spannmittel, Zylinder
- 26: Positioniereinrichtung
- 27: Positioniermittel mechanisch
- 28: Positioniermittel optisch
- 28': Positioniermittel optisch
- 29: Detektionseinrichtung
- 30: Sensoranordnung
- 31: Abtriebsglied
- 32: Sensorik
- 33: Energieversorgung
- 34: Energiekopplung
- 35: Ankoppelmittel

## Patentansprüche

1. Ankoppeleinrichtung, die zum Ankoppeln einer mobilen Prozesseinrichtung (5) mit einem programmierbaren Industrieroboter (7) und einer Transportvorrichtung (6) an einem Arbeitsplatz (2) einer Prozessstation (1) vorgesehen und ausgebildet ist, wobei die Ankoppeleinrichtung (8) eine Klemmeinrichtung (9) mit einer Klemmbacke und einem Spannmittel (25) aufweist, wobei die Klemmeinrichtung (9) zur Bildung einer die Prozesseinrichtung (5) am Arbeitsplatz (2) fixierenden Klemmverbindung zwischen der Klemmbacke und einer Klemmleiste (3), insbesondere einer Tischplatte, an dem Arbeitsplatz (2) vorgesehen und ausgebildet ist, und wobei die Klemmeinrichtung (9) mehrere, insbesondere zwei, obere und untere Klemmbacken (14,19) aufweist, die vom Spannmittel (25) gegen die Oberseite und Unterseite der Klemmleiste (3) gedrückt werden, wobei die Ankoppeleinrichtung (8) einen Träger für den Industrieroboter (7) und einen Roboteranschluss aufweist, wobei der Träger als bewegliche obere Klemmbacke (14) ausgebildet ist.

2. Ankoppeleinrichtung nach Anspruch 1, **dadurch gekennzeichnet, dass** die Klemmbacke(n) mit Abstand über dem Untergrund im Bereich einer Tischplatte am Arbeitsplatz (2) angeordnet ist/sind, wobei die Klemmbacke(n) an der Transportvorrichtung (6), insbesondere an deren Basis oder Fahrgestell (10), höhenverstellbar angeordnet ist/sind.

3. Ankoppeleinrichtung nach einem der vorhergehenden Ansprüche, **dadurch gekennzeichnet, dass** die Ankoppeleinrichtung (8) eine Positioniereinrichtung (26) aufweist, die für die Positionierung der Klemmeinrichtung (9) und/oder der mobilen Prozesseinrichtung (5) am Arbeitsplatz (2) und/oder für eine Arbeitsplatzsicherung, insbesondere für den Roboterarbeitsbereich, vorgesehen und ausgebildet ist.

4. Ankoppeleinrichtung nach Anspruch 3, **dadurch gekennzeichnet, dass** die Positioniereinrichtung (26) ein starr angeordnetes und/oder ein in mehrere Funktionsstellungen bewegliches optisches Positioniermittel (28), insbesondere einen Laserscanner, aufweist.

5. Ankoppeleinrichtung nach einem der vorhergehenden Ansprüche, **dadurch gekennzeichnet, dass** die Ankoppeleinrichtung (8) eine Detektionseinrichtung (29) zur Detektion der korrekten Klemmung an der Klemmleiste (3) aufweist.

6. Ankoppeleinrichtung nach einem der vorhergehenden Ansprüche, **dadurch gekennzeichnet, dass** die Ankoppeleinrichtung (8) eine Energiekopplung (34) aufweist.

7. Mobile Prozesseinrichtung mit einem programmierbaren Industrieroboter (7) und einer Transportvorrichtung (6) sowie einer Ankoppeleinrichtung (8) zum Ankoppeln an einem Arbeitsplatz (2) einer Prozessstation (1), **dadurch gekennzeichnet, dass** die Ankoppeleinrichtung (8) nach mindestens einem der Ansprüche 1 bis 6 ausgebildet ist.

8. Prozesseinrichtung nach Anspruch 7, **dadurch gekennzeichnet, dass** der Industrieroboter (7) als taktiler Roboter mit einer zugeordneten, bevorzugt integrierten, externe Belastungen aufnehmenden Sensorik (32) ausgebildet ist.

9. Prozesseinrichtung nach Anspruch 7 oder 8, **dadurch gekennzeichnet, dass** die Transportvorrichtung (6) eine fahrbare Basis (10) mit einer Führung (22) und ggf. einem Anschlag (23) für die Klemmeinrichtung (9) aufweist.

10. Prozesseinrichtung nach Anspruch 7, 8 oder 9, **dadurch gekennzeichnet, dass** die Transportvorrichtung (6) als führerloses, automatisches Transportfahrzeug mit einem steuerbaren Fahr- und Lenkantrieb (13) ausgebildet ist.

11. Verfahren zum Ankoppeln einer mobilen Prozesseinrichtung (5) mit einem programmierbaren Industrieroboter (7) und einer Transportvorrichtung (6) an einem Arbeitsplatz (2) einer Prozessstation (1), wobei das Ankoppeln mittels einer Klemmeinrichtung (9) mit einer bevorzugt horizontalen Klemmbacke und einem Spannmittel (25) an der mobilen Prozesseinrichtung (5) und einer Klemmleiste (3), insbesondere einer Tischplatte, am Arbeitsplatz (2) erfolgt, wobei eine fixierende Klemmverbindung zwischen der Klemmbacke und der Klemmleiste (3) gebildet wird und wobei die Klemmeinrichtung (9) mehrere, insbesondere zwei, obere und untere Klemmbacken (14,19) aufweist, die vom Spannmittel (25) gegen die Oberseite und Unterseite der Klemmleiste (3) gedrückt werden, wobei
die Ankoppeleinrichtung (8) einen Träger für den Industrieroboter (7) und einen Roboteranschluss aufweist, wobei der Träger als bewegliche obere Klemmbacke (14) ausgebildet ist.

12. Verfahren nach Anspruch 11 **dadurch gekennzeichnet, dass** eine einzelne obere oder untere Klemmbacke (14,19) gegen die Oberseite oder Unterseite der Klemmleiste (3) gedrückt wird oder mehrere, insbesondere zwei, obere oder untere Klemmbacken (14,19) gegen die Oberseite und Unterseite der Klemmleiste (3) gedrückt werden.

13. Verfahren nach Anspruch 11 oder 12, **dadurch gekennzeichnet, dass** die Klemmbacke (14,19) mit flächiger Anlage gegen die Klemmleiste (3) gedrückt wird, wobei mit einer Detektionseinrichtung (29) die korrekte Klemmung und evtl. Störungen, insbesondere Fremdkörper oder Körperteile im Klemmbereich, detektiert werden.

14. Verfahren nach Anspruch 11, 12 oder 13 **dadurch gekennzeichnet, dass** mittels einer Positioniereinrichtung (26) die Klemmeinrichtung (9) und/oder die mobile Prozesseinrichtung (5) am Arbeitsplatz (2) positioniert und/oder der Arbeitsbereich des Industrieroboters (7) am Arbeitsplatz (2) gesichert wird.

15. Verfahren nach einem der Ansprüche 11 bis 14, **dadurch gekennzeichnet, dass** ein in mehrere Funktionsstellungen bewegliches optisches Positioniermittel (28), insbesondere ein Laserscanner, zu Navigations- und Sicherheitszwecken eingesetzt wird.

## Claims

1. Coupling device which is provided and configured for coupling a mobile process device (5) having a programmable industrial robot (7) and a transport apparatus (6) to a work station (2) of a process station (1), wherein the coupling device (8) has a clamping device (9) with a clamping jaw and a tensioning means (25), wherein the clamping device (9) is provided and configured for forming a clamping connection between the clamping jaw and a clamping strip (3), in particular a table top, at the work station (2), the clamping connection fixing the process device (5) on the work station (2), and wherein the clamping device (9) has a plurality of upper and lower clamping jaws (14, 19), in particular two, which are pressed against the upper side and lower side of the clamping strip (3) by the tensioning means (25), wherein the coupling device (8) has a support for the industrial robot (7) and a robot connection, wherein the support is configured as a movable upper clamping jaw (14).

2. Coupling device according to Claim 1, **characterized in that** the clamping jaw(s) is/are arranged at a distance above the underlying surface in the region of a table top at the work station (2), wherein the clamping jaw(s) is/are arranged height-adjustably on the transport apparatus (6), in particular on the base or chassis (10) thereof.

3. Coupling device according to either of the preceding claims, **characterized in that** the coupling device (8) has a positioning device (26) which is provided and configured for positioning the clamping device (9) and/or the mobile process device (5) on the work station (2), and/or for securing a work station, in particular for the working region of the robot.

4. Coupling device according to Claim 3, **characterized in that** the positioning device (26) has an optical positioning means (28), in particular a laser scanner, which is arranged rigidly and/or which is movable into a plurality of functional positions.

5. Coupling device according to one of the preceding claims, **characterized in that** the coupling device (8) has a detection device (29) for detecting the correct clamping to the clamping strip (3).

6. Coupling device according to one of the preceding claims, **characterized in that** the coupling device (8) has an energy coupling (34).

7. Mobile process device having a programmable industrial robot (7) and a transport apparatus (6), and having a coupling device (8) for coupling to a work station (2) of a process station (1), **characterized in that** the coupling device (8) is configured according to at least one of Claims 1 to 6.

8. Process device according to Claim 7, **characterized in that** the industrial robot (7) is configured as a tactile robot with an associated, in particular integrated, sensor system (32) detecting external loads.

9. Process device according to Claim 7 or 8, **characterized in that** the transport apparatus (6) has a movable base (10) having a guide (22) and optionally a stop (23) for the clamping device (9).

10. Process device according to Claim 7, 8 or 9, **characterized in that** the transport apparatus (6) is configured as a driverless automatic transport vehicle having a controllable travel and steering drive (13).

11. Method for coupling a mobile process device (5) having a programmable industrial robot (7) and a transport apparatus (6) to a work station (2) of a process station (1), wherein the coupling takes place by means of a clamping device (9) having a preferably horizontal clamping jaw and a tensioning means (25) at the mobile process device (5) and with a clamping strip (3), in particular a table top, at the work station (2), wherein a fixing clamping connection is formed between the clamping jaw and the clamping strip (3), and wherein the clamping device (9) has a plurality of upper and lower clamping jaws (14, 19), in particular two, which are pressed against the upper side and lower side of the clamping strip (3) by the tensioning means (25), wherein the coupling device (8) has a support for the industrial robot (7) and a robot connection, wherein the support is configured as a movable upper clamping jaw (14).

12. Method according to Claim 11, **characterized in that** an individual upper or lower clamping jaw (14, 19) is pressed against the upper side or lower side of the clamping strip (3), or a plurality of upper or lower clamping jaws (14, 19), in particular two, are pressed against the upper side and lower side of the clamping strip (3).

13. Method according to Claim 11 or 12, **characterized in that** the clamping jaw (14, 19) is pressed with flat contact against the clamping strip (3), wherein the correct clamping and possible disturbances, in particular foreign bodies or body parts in the clamping region, are detected with a detection device (29).

14. Method according to Claim 11, 12 or 13, **characterized in that** the clamping device (9) and/or the mobile process device (5) are/is positioned at the work station (2) and/or the working region of the industrial robot (7) is secured at the work station (2) by means of a positioning device (26).

15. Method according to one of Claims 11 to 14, **characterized in that** an optical positioning means (28), in particular a laser scanner, which is movable into a plurality of functional positions, is used for navigation and safety purposes.

## Revendications

1. Dispositif de couplage qui est prévu et réalisé pour coupler un dispositif de traitement mobile (5) à un robot industriel programmable (7) et à un dispositif de transport (6) au niveau d'un poste de travail (2) d'une station de traitement (1), le dispositif de couplage (8) présentant un dispositif de serrage (9) doté d'une mâchoire de serrage et d'un moyen de tension (25), le dispositif de serrage (9) étant prévu et réalisé pour former un assemblage par serrage, fixant le dispositif de traitement (5) au poste de travail (2), entre la mâchoire de serrage et une barre de serrage (3), en particulier un dessus de table, au niveau du poste de travail (2), et le dispositif de serrage (9) présentant plusieurs, en particulier deux, mâchoires de serrage (14, 19) supérieures et inférieures qui sont plaquées par le moyen de tension (25) contre la face supérieure et la face inférieure de la barre de serrage (3), le dispositif de couplage (8) présentant un support pour le robot industriel (7) et une connexion de robot, le support étant réalisé sous la forme d'une mâchoire de serrage supérieure (14) mobile.

2. Dispositif de couplage selon la revendication 1, **caractérisé en ce que** la ou les mâchoires de serrage sont disposées à distance au-dessus du sol au niveau d'un dessus de table au niveau du poste de travail (2), la ou les mâchoires de serrage étant disposées sur le dispositif de transport (6), en particulier sur sa base ou son châssis (10), de manière réglable en hauteur.

3. Dispositif de couplage selon l'une quelconque des revendications précédentes, **caractérisé en ce que** le dispositif de couplage (8) présente un dispositif de positionnement (26) qui est prévu et réalisé pour positionner le dispositif de serrage (9) et/ou le dispositif de traitement mobile (5) au niveau du poste de travail (2) et/ou pour sécuriser le poste de travail, en particulier pour la zone de travail du robot.

4. Dispositif de couplage selon la revendication 3, **caractérisé en ce que** le dispositif de positionnement (26) présente un moyen de positionnement optique (28), en particulier un scanner laser, disposé de manière fixe et/ou mobile selon plusieurs positions de fonction.

5. Dispositif de couplage selon l'une quelconque des revendications précédentes, **caractérisé en ce que** le dispositif de couplage (8) présente un dispositif de détection (29) pour détecter le serrage correct au niveau de la barre de serrage (3).

6. Dispositif de couplage selon l'une quelconque des revendications précédentes, **caractérisé en ce que** le dispositif de couplage (8) présente un couplage d'énergie (34).

7. Dispositif de traitement mobile, comprenant un robot industriel programmable (7) et un dispositif de transport (6) ainsi qu'un dispositif de couplage (8) pour le couplage à un poste de travail (2) d'une station de traitement (1), **caractérisé en ce que** le dispositif de couplage (8) est réalisé selon au moins l'une des revendications 1 à 6.

8. Dispositif de traitement selon la revendication 7, **caractérisé en ce que** le robot industriel (7) est réalisé sous la forme d'un robot tactile doté d'un système de capteurs associé (32), de préférence intégré, enregistrant des sollicitations externes.

9. Dispositif de traitement selon la revendication 7 ou 8, **caractérisé en ce que** le dispositif de transport (6) présente une base roulante (10) dotée d'un guidage (22) et le cas échéant d'une butée (23) pour le dispositif de serrage (9).

10. Dispositif de traitement selon la revendication 7, 8 ou 9, **caractérisé en ce que** le dispositif de transport (6) est réalisé sous la forme d'un véhicule de transport automatique sans conducteur, doté d'un entraînement de conduite et de direction (13) pouvant être commandé.

11. Procédé permettant de coupler un dispositif de traitement (5) mobile à un robot industriel programmable (7) et à un dispositif de transport (6) au niveau d'un poste de travail (2) d'une station de traitement (1), le couplage étant effectué au moyen d'un dispositif de serrage (9), doté d'une mâchoire de serrage de préférence horizontale et d'un moyen de tension (25), au dispositif de traitement mobile (5) et à une barre de serrage (3), en particulier un dessus de table, au niveau du poste de travail (2), un assemblage par serrage de fixation étant formé entre la mâchoire de serrage et la barre de serrage (3), et le dispositif de serrage (9) présentant plusieurs, en particulier deux, mâchoires de serrage supérieures et inférieures (14, 19), qui sont plaquées par le moyen de tension (25) contre la face supérieure et la face inférieure de la barre de serrage (3), dans lequel le dispositif de couplage (8) présente un support pour le robot industriel (7) et une connexion de robot, le support étant réalisé sous la forme d'une mâchoire de serrage supérieure mobile (14).

12. Procédé selon la revendication 11, **caractérisé en ce qu'**une seule mâchoire de serrage supérieure ou inférieure (14, 19) est plaquée contre la face supérieure ou la face inférieure de la barre de serrage (3), ou plusieurs, en particulier deux, mâchoires de serrage supérieures ou inférieures (14, 19) sont plaquées contre la face supérieure et la face inférieure de la barre de serrage (3).

13. Procédé selon la revendication 11 ou 12, **caractérisé en ce que** la mâchoire de serrage (14, 19) est plaquée contre la barre de serrage (3) en appui à plat, un dispositif de détection (29) détectant le serrage correct ou des obstructions éventuelles, en particulier des corps étrangers ou des parties du corps, dans la zone de serrage.

14. Procédé selon la revendication 11, 12 ou 13 **caractérisé en ce qu'**un dispositif de positionnement (26) positionne le dispositif de serrage (9) et/ou le dispositif de traitement mobile (5) au poste de travail (2), et/ou la zone de travail du robot industriel (7) au poste de travail (2) est sécurisée.

15. Procédé selon l'une quelconque des revendications 11 à 14, **caractérisé en ce qu'**un moyen de positionnement optique (28) mobile selon plusieurs positions de fonction, en particulier scanner laser, est mis en œuvre à des fins de navigation et de sécurité.
